# EUROPÄISCHE PATENTANMELDUNG

(11) **EP 2 174 725 A2**
(43) Veröffentlichungstag der Anmeldung: **14.04.2010**
(21) Anmeldenummer: 09012549.3
(22) Anmeldetag: 05.10.2009
(51) Int. Cl.: B08B 5/02, B08B 7/00, B29C 47/08, B29C 33/72

(54) **Einrichtung und Verfahren zur Reinigung von Werkzeugen für die Kunststoffverarbeitung**

(30) Priorität: 09.10.2008 CH 16052008
(71) Anmelder: BAK Thermoplastic Welding Technology AG, 6056 Kägiswil (CH)
(72) Erfinder: Zurmühle, Bruno, 6056 Kägiswil (CH)
(74) Vertreter: Schalch, Rainer

(57) **Zusammenfassung**

Zur Reinigung von Gegenständen, und insbesondere von Düsen von Kunststoffteile herstellenden Vorrichtungen, wird erhitzte Druckluft verwendet. Zu deren Erzeugung ist ein Kompressor (2) vorgesehen sowie ein Lufterhitzer (9). Die erhitzte Druckluft, welche bis 650°C erhitzt werden kann, wird über eine Düse (13) abgegeben und kann damit als heisser Luftstrahl (18) auf den zu reinigenden Gegenstand (15, 16) abgegeben werden.

## Beschreibung

### Hintergrund der Erfindung

Die Erfindung betrifft eine Einrichtung zur Erzeugung von erhitzter Druckluft. Weiter betrifft die Erfindung eine Verwendung der Einrichtung sowie ein Verfahren zur Reinigung von Gegenständen, welche bei der Kunststoffverarbeitung eingesetzt werden.

### Stand der Technik

Aus DE-05 27 10 069 ist eine Einrichtung zum Reinigen der Trennflächen von Kunststoffformen bekannt, welche mit dem Blasen von Luft gegen die Trennflächen der Werkzeuge, dem Abbürsten der Trennflächen und dem Absaugen von Staub arbeitet. Es ist in der Praxis bei der Herstellung von Kunststoffteilen durch Spritzgiessen auch üblich, Pressluft über eine Düse von Hand gegen die aufgeheizte Form bzw. Baugruppen der Form und in Düsen der Spritzgiessmaschine zu blasen, um diese von Kunststoffrückständen zu befreien. Dies ist aber bekanntermassen sehr zeitaufwändig. In US-A-2003/007693 wird eine Reinigung von Spritzgussformen mit Trockeneis vorgeschlagen.

### Darstellung der Erfindung

Der Erfindung liegt die Aufgabe zu Grunde, eine Einrichtung zur Erzeugung von erhitzter Druckluft zu schaffen, die für die Reinigung von Gegenständen geeignet ist, die bei der Herstellung von Kunststoffteilen verwendet werden.

Diese Aufgabe wird mit einer Einrichtung nach Anspruch 1 gelöst.

Mit einer solchen Einrichtung ist auf einfache Weise heisse Druckluft erzeugbar.

Bevorzugt ist die Einrichtung so aufgebaut, dass diese eine Düse umfasst, durch welche die erhitzte Druckluft als Luftstrahl abgebbar ist. Eine für die Reinigung von Kunststoff verarbeitenden Vorrichtungen besonders geeignete Ausführung ist so gebildet, dass die Düse an einem vom Lufterhitzer getrennten Ausblasteil angeordnet ist, welches mit dem Lufterhitzer über eine flexible Leitung verbunden ist. Insbesondere ist dabei die flexible Leitung mit einer thermischen Isolation versehen und in einer besonderen Ausführung ist die flexible Leitung von einem Wellrohr aus Metall gebildet, welches von einer thermischen Isolation umgeben ist, insbesondere einer Glasfaserisolation. Die flexible Leitung erlaubt eine Handhabung des Ausblasteils mit der Düse, die den Zugang an die zu reinigenden Stellen an der Kunststoff verarbeitenden Maschine besonders erleichtert. Dies insbesondere, wenn das Ausblasteil einen Mantel aufweist, an welchem mindestens ein Handgriff angeordnet ist, wobei der Mantel gegenüber der Düse und der Leitung um die Längsachse der Leitung drehbar ist. Besonders vorteilhaft ist dabei, wenn am Mantel zwei separate Handgriffe angeordnet sind.

Die bevorzugte Verwendung der Einrichtung liegt in der Reinigung von Düsen, durch welche Kunststoff bei der Herstellung von Kunststoffteilen geleitet wird. Solche Düsen der Kunststoff verarbeitenden Vorrichtung sind insbesondere zwischen dem Extruder und den Heisskanälen (hotrunner) angeordnet und können mit der Einrichtung gemäss der Erfindung besonders einfach gereinigt werden, da der heisse Luftstrahl aus der Düse der Einrichtung, besonders mit dem Ausblasteil und seiner bevorzugten Gestaltung, genau auf die zu reinigenden Düsen gerichtet werden kann. Dies erlaubt damit allenfalls die Reinigung der Düsen ohne Ausbau aus der Vorrichtung.

Der Erfindung liegt weiter die Aufgabe zu Grunde ein Verfahren zu schaffen, mit welchem sich eine einfache Möglichkeit zur Reinigung von Gegenständen ergibt, die bei der Herstellung von Kunststoffteilen verwendet werden.

Diese Aufgabe wird mit dem Verfahren nach Anspruch 12 gelöst.

Es hat sich gezeigt, dass die Reinigung mit erhitzter Druckluft eine wesentliche Verbesserung ergibt, da sie rascher erfolgt und für das Bedienungspersonal einfacher ist. Dabei wird die Druckluft auf eine Temperatur erhitzt, welche über der Schmelztemperatur des verarbeiteten Kunststoffes liegt.

Die Druckluft wird vorzugsweise über eine bedienbare Düse als Luftstrahl abgegeben.

### Kurze Beschreibung der Zeichnungen

Im Folgenden werden Ausführungsbeispiele der Erfindung anhand der Figuren näher erläutert. Dabei zeigt
Figur 1 grob schematisch die Erzeugung und den Einsatz der erhitzten Druckluft;
Figur 2 eine schaubildliche Ansicht einer Einrichtung gemäss einem Ausführungsbeispiels der Erfindung;
Figur 3 eine Seitenansicht der Einrichtung von Figur 2;
Figur 4 eine Ausführung einer Düseneinheit mit Handgriffen; und
Figur 5 eine Ansicht in das Innere der Düseneinheit von Figur.

### Wege zur Ausführung der Erfindung

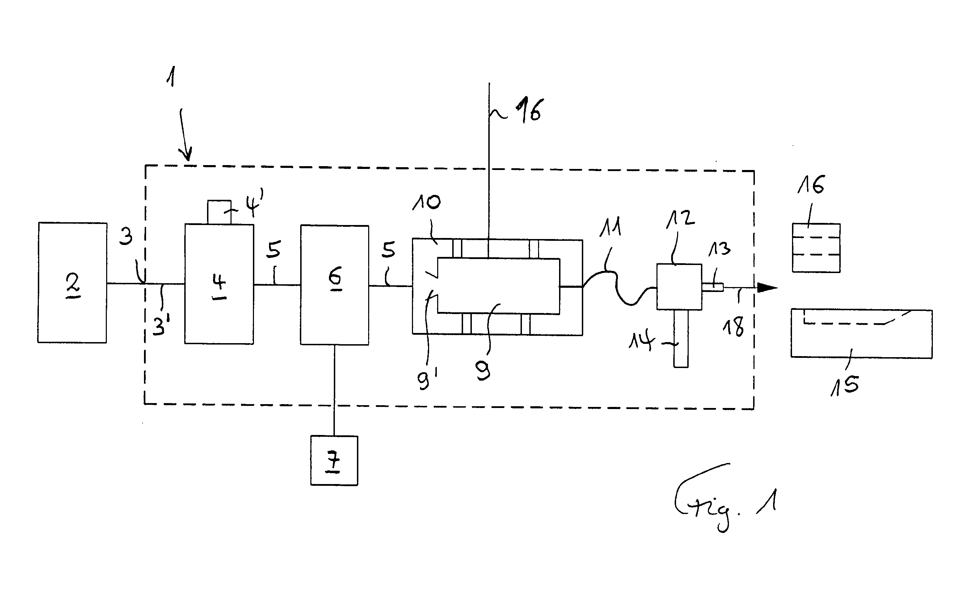

Figur 1 zeigt eine grobschematische Ansicht einer Einrichtung zur Erzeugung von Druckluft mit sehr hoher Temperatur, welche zur Reinigung von Gegenständen verwendet werden kann. Dabei ist ein herkömmlicher Kompressor 2 vorgesehen, welcher Druckluft in einem üblichen Druckluftbereich bereitstellt, wie er insbesondere in Gewerbebetrieben verwendet wird. Dies kann der Bereich von 3-15 bar und insbesondere bis 10 bar Druck sein. Die Einrichtung kann diesen Kompressor 2 umfassen. Sie kann aber auch nur einen Druckluftanschluss aufweisen, wie dies in Figur 1 mit der mit unterbrochener Linie umrandete Einrichtung 1 dargestellt ist, die einen Druckluftanschluss 3 aufweist, an welchen eine beliebige Druckluftquelle anschliessbar ist, so dass die Einrichtung 1 ohne den dargestellten Kompressor 2 betrieben werden kann, wenn ihr über den Anschluss 3 Druckluft zugeführt wird. Bevorzugt führt die Leitung 3', welche vom Druckluftanschluss ausgeht, in ein Druckbegrenzungsventil 4, welches zudem einen Wasser- und Ölabscheider umfassen kann, wenn dies nicht bereits beim Drucklufterzeuger vorgesehen ist. Über ein Einstellglied 4' kann der Druck der Druckluft begrenzt werden, welche über die Leitung 5 an ein steuerbares Ventil 6 abgegeben wird. Das Ventil 6 ist über ein Betätigungsmittel 7 betätigbar, welches z.B. ein Fusspedal sein kann oder ein von Hand betätigbarer Schalter. Insbesondere kann dieser Schalter am Handgriff 14 vorgesehen sein, was später noch erläutert wird. Vom Ventil 6 gelangt die Druckluft über die weitere Leitung 5 in den Lufterhitzer 9. Beim Lufterhitzer 9 handelt es sich vorzugsweise um einen handelsüblichen elektrischen Lufterhitzer, welcher Luft z.B. auf eine maximale Temperatur von 650°C aufheizen kann. Entsprechende Lufterhitzer sind bekannt und handelsüblich. Vorliegend könnte z.B. der Typ M50 oder M50L der Firma BAK Thermoplastic Welding Technology AG, Kägiswil, Schweiz, verwendet werden. Da derartige Lufterhitzer in der Regel nicht für Druckluft mit dem hier verwendeten hohen Druck von 3-10 bar oder allenfalls noch höher ausgelegt sind, ist der Lufterhitzer 9 bevorzugt in einem Druckgefäss 10 angeordnet, welches für diesen Druck ausgelegt ist. Der Lufterhitzer 9 ist somit innenseitig und aussenseitig demselben Druck ausgesetzt. Er nimmt über seine Einblasöffnung 9' die Druckluft an und erhitzt und fördert sie zu seinem Ausgang und dann über eine Leitung 11, die vom Druckbehälter 10 zu einem Ausblasteil 12 führt. Der Lufterhitzer 9 ist z.B. für eine Fördermenge von 350 oder 450 l/min ausgelegt. Der Lufterhitzer 9 wird über eine elektrische Leitung 16 z.B. mit Netzwechselspannung versorgt. Das Ausblasteil 12 weist vorzugsweise eine Düse 13 auf, aus welcher die Druckluft mit hoher Geschwindigkeit austritt, was mit dem Pfeil 18 dargestellt ist. Die Ausblaseinrichtung 12 weist z.B. einen Handgriff 14 auf, welcher es der Bedienungsperson erlaubt, den erhitzten Druckluftstrahl 18 zur Reinigung auf einen Gegenstand 15 oder 16 zu richten und dort mit dem Druckluftstrahl 18 zu reinigen. Der Druckluftstrahl kann dabei eine Temperatur aufweisen, die von der Temperatur der nicht erhitzten Druckluft bis zu erhitzter Druckluft von mehreren Hundert Grad Celsius reicht, z.B. bis 350°C oder bevorzugt bis 620°C oder bis 650°C. Bei einer möglichen Verwendung sind die Teile 15 und 16 Baugruppen eines Spritzgiesswerkzeuges für die Herstellung von Kunststoffteilen. Bei der bevorzugten Verwendung sind die zu reinigenden Gegenstände indes Düsen einer Vorrichtung zur Herstellung von Kunststoffteilen und insbesondere die Düsen, die sich zwischen dem Extruder und den Heisskanälen einer solchen Vorrichtung befinden.

Die Einrichtung 1 erlaubt die Reinigung von Gegenständen mit erhitzter Druckluft. Dies kann für verschiedene Gegenstände vorteilhaft sein, bei denen der Gegenstand selber resistent gegen die Temperaturen der erhitzen Druckluft ist, während die Verunreinigung bei entsprechenden Temperaturen schmilzt oder allenfalls auch verbrennt.

Bevorzugt wird das Reinigungsverfahren mit erhitzter Druckluft für die Reinigung von Werkzeugen eingesetzt, mit welchen Kunststoff verarbeitet wird. Insbesondere werden unter dem Begriff Werkzeug hier sämtliche Teile von Kunststoff verarbeitenden Maschinen bzw. Vorrichtungen, und insbesondere von Spritzgiessmaschinen verstanden, welche der Herstellung von Kunststoffteilen dienen und welche, z.B. nach der Herstellung bzw. Entformung eines Teils oder einer Mehrzahl von Teilen, von Kunststoffresten gereinigt werden müssen. Dies können insbesondere die Spritzgiessformen bzw. deren Baugruppen selber mir ihren Ausnehmungen und Kanälen sein, dies können aber auch andere Teile und Kanäle oder Düsen sein, durch welche der Kunststoff bei der Herstellung von Kunststoffteilen geleitet wird und welche von Kunststoffresten gereinigt werden müssen. Bevorzugt sind dies die Düsen zwischen Extruder und Heisskanälen von Vorrichtungen zur Herstellung von Kunststoffteilen. Erfindungsgemäss erfolgt die Reinigung mit erhitzter Druckluft. Diese Druckluft ist insbesondere Druckluft, welche vor dem Ausblasen auf den zu reinigenden Gegenstand einen Druck im Bereich von 3-15 bar und insbesondere von 3-10 bar aufweist. Wird, was bevorzugt ist, zum Ausblasen der Druckluft eine Düse verwendet, so wird durch die Düse entsprechend ein Luftstrahl 18 mit hoher Geschwindigkeit erzeugt. Die Düsenform kann dabei beliebig sein und insbesondere kann die Düse auswechselbar sein, um verschiedene Luftstrahlen zu erzeugen. Es können Düsen mit mehreren Austrittsöffnungen verwendet werden, welche mehrere Luftstrahlen erzeugen oder es können auch Düsen mit rechteckigem Querschnitt (sogenannte Luftklingen) verwendet werden. Die Temperatur der Druckluft vor der Düse beträgt z.B. 100 bis 650°C oder bis 620°C oder 100-500°C. Diese Temperatur ist vorzugsweise einstellbar. Zur Reinigung des Gegenstandes wird die Temperatur der Druckluft so gewählt, dass der aus der Düse austretende Druckluftstrahl 18 eine Temperatur aufweist, welche die Verunreinigung zum Schmelzen bringt und somit das Wegblasen in flüssiger, geschmolzener Form von der zu reinigenden Oberfläche oder aus der zu reinigenden Öffnung erlaubt. Insbesondere können Öffnungen und auch feine Düsenöffnungen mit dieser erhitzten Druckluft ausgeblasen werden, bevorzugt Düsen zwischen einem Extruder und Heisskanälen bei der Kunststoffverarbeitung. Bei der bevorzugten Reinigung von Werkzeugen zur Kunststoffverarbeitung wird somit die Drucklufttemperatur so gewählt, dass der Luftstrahl 18 den Kunststoff zu schmelzen vermag. Dies wird gefördert, wenn die zu reinigenden Teile ebenfalls erhitzt werden, was im Falle einer Spritzgussform durch die entsprechende Heizung der Spritzgiessmaschine erfolgen kann. Auf die genannte Weise ergibt sich eine sehr einfache Reinigung, da die Bedienungsperson den heissen Druckluftstrahl 18 in geeigneter Weise auf den zu reinigenden Gegenstand 15, 16 lenken kann, um die Verunreinigung zu verflüssigen und wegzublasen. Da die Verflüssigung durch den erhitzten Luftdruckstrahl 18 erfolgt, ergibt sich eine sehr rasche Reinigung, bei welcher die zu entfernende Verunreinigung bzw. der zu entfernende Kunststoff auf der zu reinigenden Fläche durch den Druckluftstrahl flüssig gehalten wird und dadurch weggeblasen werden kann. Dies im Gegensatz zur Verwendung kalter Pressluft auf einem aufgeheizten Werkzeug, welche in der Regel zu einem Erstarren der wegzublasenden Verunreinigung führt, so dass diese nur in mehreren Schritten entfernt werden kann. Insbesondere können enge Kanäle an Werkzeugen gereinigt werden, was mit nicht erhitzter Druckluft kaum möglich ist und Kunststoff kann an schwer zugänglichen Stellen verflüssigt werden. Insbesondere die Düsen von Kunststoffspritzmaschinen können problemlos von Kunststoffrückständen befreit werden.

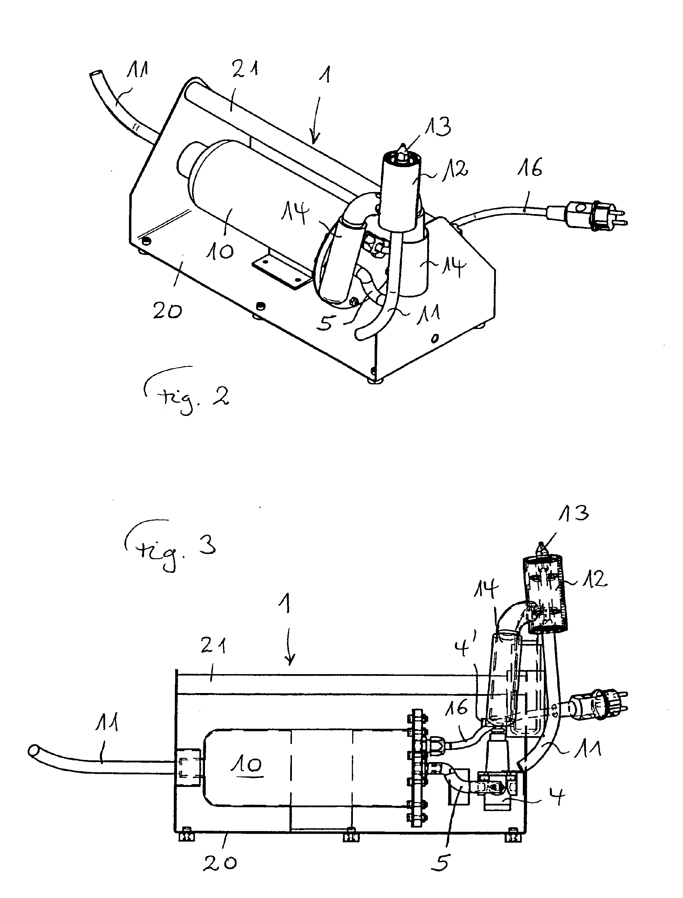

Die Figuren 2 und 3 zeigen eine Ausführungsform der Einrichtung 1 als tragbare Einrichtung mit einem Gestell 20 und einem Handgriff 21. Der Kompressor 2 ist hier nicht Teil der Einrichtung 1, sondern diese weist einen Anschluss 3 für Druckluft auf. Dieser ist in der Zeichnung nicht ersichtlich, da er auf der nicht sichtbaren Seite des Druckreduzierventils 4 liegt, welches in Figur 3 ersichtlich ist. Dieses Ventil kann an seiner Oberseite das Einstellglied 4' für den gewünschten reduzierten Druck aufweisen. Ebenso enthält dieses Druckreduzierventil 4 den bevorzugten Öl- und Wasserabscheider. Nach dem Druckreduzierventil 4 folgt die Leitung 5, welche die Druckluft in den Druckbehälter 10 führt, in welchem der Lufterhitzer 9 angeordnet ist. In diesem erfolgt auf die erwähnte Weise die Erhitzung der Druckluft und deren Förderung durch das Gebläse des Lufterhitzers. Das steuerbare Ventil 6 für die Druckluft ist in diesem Beispiel entweder mit dem Druckreduzierventil 4 kombiniert oder im Druckluftbehälter 10 angeordnet, und in der Figur nicht ersichtlich. Ebenso sind die Steuerleitungen für das Ventil und dessen Betätigungselement 7 in den Figuren 2 und 3 nicht dargestellt. Die erhitzte Druckluft wird am Ausgang des Druckbehälters 10 ausgegeben und über die Leitung 11 zum Ausblasteil 12 bzw. zur Düse 13 geführt. Die Leitung 11 ist dabei in den Figuren 2 und 3 nur teilweise bzw. mit einem Unterbruch dargestellt, um die Figur zu vereinfachen. Bevorzugt ist diese Leitung 11 eine flexible Leitung, welche für den genannten Druck und Temperaturbereich ausgelegt ist. Die Leitung kann insbesondere als flexibles Wellrohr aus Metall ausgeführt sein, welches mit einer äusseren Glasfaserisolation versehen ist, damit die Leitung gegen Berührung bzw. zu grosse Abstrahlung geschützt ist. Ausserhalb der Glasfaserisolation kann eine weitere Isolation aus Kunststoff vorgesehen sein. Anstelle einer flexiblen Leitung kann auch eine Rohrleitung aus starren Rohrstücken mit Gelenken verwendet werden. Wird der Temperaturbereich bis 650°C des Lufterhitzers nicht ausgenützt bzw. dieser nur in einem Bereich bis etwa 320° betrieben, so können auch Fiberglasschläuche verwendet werden, welche für derartige Temperaturen ausgelegt sind. Ein solcher Schlauch ist z.B. der Flex-Flight^{®}L-9 Schlauch der Firma High-Tech Durawent, Plymouth, Indiana, USA.

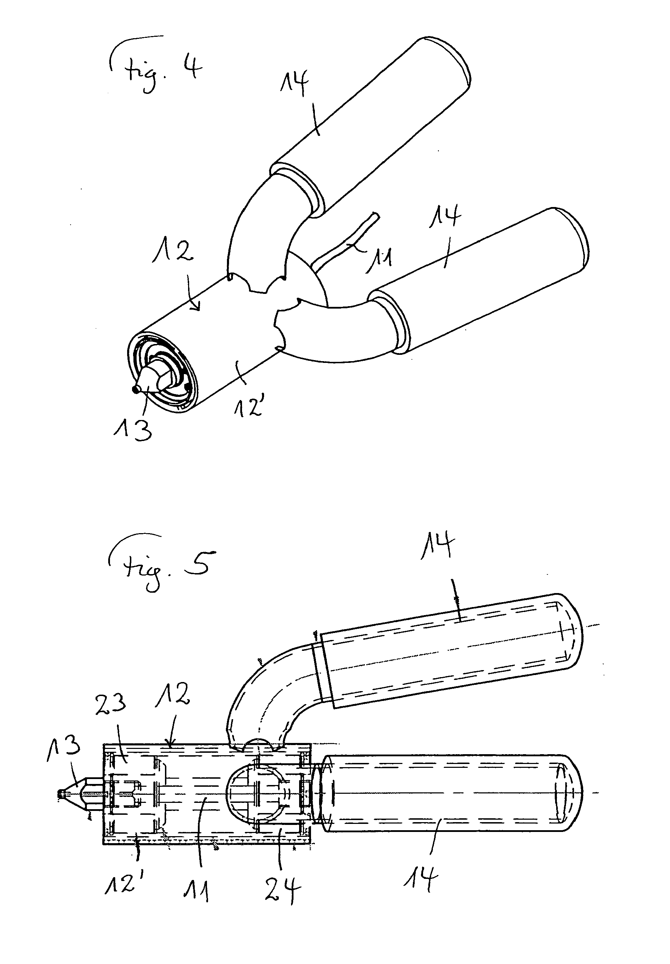

Die Figuren 4 und 5 zeigen eine bevorzugte Ausgestaltung des Ausblasteils 12 mit der Düse 13 und den Handgriffen 14. Figur 4 zeigt dabei eine schaubildliche Darstellung, bei welcher die Leitung 11 angedeutet ist. Zwei Handgriffe 14 sind bevorzugt, um ein sicheres Führen des Ausblasteils 12 trotz des mit hoher Geschwindigkeit austretenden Luftstrahles zu ermöglichen. Zwei Handgriffe können auch der Arbeitssicherheit dienen, wenn die Auslegung der Einrichtung so erfolgt, dass diese nur betrieben werden kann, wenn beide Handgriffe von der Bedienungsperson umfasst sind. An einem oder beiden der Handgriffe kann das Betätigungselement 7 vorgesehen sein, welches das Ventil zur Zuführung der Druckluft zum Heisslufterzeuger betätigt. Bevorzugt ist indes auch, dass das Betätigungselement 7 ein Fusspedal ist. Der Aussenmantel 12' des Ausblasteils 12 ist vorzugsweise gegenüber der Leitung 11 und deren Anschluss an die Düse 13 isoliert. Im inneren des Ausblasteils 12 kann somit die Leitung 11 nur aus dem metallenen Rohr ohne die isolierende Umhüllung des Rohres bestehen. In Figur 5 ist ersichtlich, wie die Isolierung des Aussenmantels 12' über Isolierstücke 23 und 24 erfolgt. Dabei nimmt das Stück 23 in einer inneren Ausnehmung die Düse 13, deren Anschluss an die Leitung 11 und einen Teil der Leitung 11 auf. Das Isolierstück 24 nimmt die Leitung 11 auf, die in das Ausblasteil 12 hinein führt. Diese Isolierteile können z.B. aus asbestfreiem, verpresstem Faserzement hergestellt sein. Solche Bauteile sind z.B. unter der Bezeichnung K-Therm^{®} von der Firma AGK Hochleistungswerkstoffe, Dortmund, Deutschland erhältlich. Bevorzugt sind die Isolierteile 23 und 24 so ausgeführt und an der Leitung 11 bzw. der Düse 13 angeordnet, dass diese um die Leitung und die Düse drehbar sind. Damit ist der Mantel 12' und sind die daran befestigten Griffe 14 des Ausblasteils 12 um die Leitung 11 und die Düse drehbar, was ein einfaches Führen und Positionieren durch die Bedienungsperson erlaubt und die Leitung 11 vor Torsion schützt.

Das Ausblasteil 12 kann auch über Verbindungsmittel wie Schraubverbindungen oder Flanschverbindungen, gegebenenfalls unter Weglassung der Handgriffe 14, an einen Roboter oder ein anderes Bewegungsmittel angeschlossen werden, so dass die Reinigung nicht händisch sondern automatisch erfolgen kann.

Es ist auch möglich, die Heisslufterzeugung direkt in das Ausblasteil 12 zu integrieren, so dass über die Leitung 11 lediglich noch nicht erhitzte Druckluft zugeführt wird. Das Ausblasteil 12 wird damit schwerer, kann aber über eine Zugentlastung z.B. deckenseitig aufgehängt werden, so dass sein Gewicht kompensiert wird. Die Bedienungsperson kann dann dieses Ausblasteil 12 mit dem Heisslufterzeuger ebenfalls einfach führen und bedienen. Diesem Ausblasteil 12 wird dann lediglich Druckluft und elektrische Energie zugeführt, was die Verwendung einer Leitung 11 vermeidet, die für hohe Temperatur und hohen Druck ausgelegt werden muss.

## Patentansprüche

1. Einrichtung (1) zur Erzeugung von erhitzter Druckluft, umfassend einen Kompressor (2) oder einen Eingangsanschluss (3) für Druckluft, einen elektrischen Lufterhitzer (9) mit einem Ausgang für die erhitzte Luft und ein steuerbares Ventil (6, 7), mittels welchem die Abgabe erhitzter Druckluft steuerbar ist.

2. Einrichtung nach Anspruch 1, umfassend eine Düse (13), durch welche die erhitzte Druckluft abgebbar ist.

3. Einrichtung nach Anspruch 1 oder 2, **dadurch gekennzeichnet, dass** die Düse (13) an einem vom Lufterhitzer (9) getrennten Ausblasteil (12) angeordnet ist, welches mit dem Lufterhitzer über eine flexible Leitung (11) verbunden ist.

4. Einrichtung nach Anspruch 3, **dadurch gekennzeichnet, dass** die flexible Leitung (11) mit einer thermischen Isolation versehen ist.

5. Einrichtung nach einem der Ansprüche 3 oder 4, **dadurch gekennzeichnet, dass** die flexible Leitung (11) von einem Wellrohr aus Metall gebildet ist, welches von einer thermischen Isolation umgeben ist, insbesondere einer Glasfaserisolation.

6. Einrichtung nach einem der Ansprüche 3 bis 5, **dadurch gekennzeichnet, dass** das Ausblasteil (12) einen Aussenmantel (12') aufweist, an welchem mindestens ein Handgriff (14) angeordnet ist, wobei der Aussenmantel gegenüber der Düse (13) und der Leitung (11) um die Längsachse der Leitung drehbar ist.

7. Einrichtung nach Anspruch 6, **dadurch gekennzeichnet, dass** der Aussenmantel (12') mittels Isolierstücken (23, 24) gegenüber der Leitung (11) und dem Anschluss der Düse an die Leitung thermisch isoliert ist.

8. Einrichtung nach Anspruch 6 oder 7, **dadurch gekennzeichnet, dass** am Aussenmantel (12') zwei separate Handgriffe angeordnet sind.

9. Einrichtung nach einem der Ansprüche 3 bis 7, **dadurch gekennzeichnet, dass** das Ausblasteil (12) eine Kopplungseinrichtung zur Kopplung des Ausblasteils an ein Bewegungsmittel aufweist.

10. Einrichtung nach einem der Ansprüche 1 bis 8, **dadurch gekennzeichnet, dass** der Lufterhitzer (9) in einem Druckbehälter (10) angeordnet ist.

11. Verwendung einer Einrichtung nach einem der Ansprüche 1 bis 10 zur Reinigung von Düsen, durch welche Kunststoff bei der Herstellung von Kunststoffteilen geleitet wird, insbesondere zur Reinigung von Düsen, welche zwischen einem Extruder und Heisskanälen angeordnet sind.

12. Verfahren zur Reinigung von Werkzeugen (15, 16), insbesondere Düsen, welche bei der Kunststoffverarbeitung eingesetzt werden, **dadurch gekennzeichnet, dass** zur Reinigung mit erhitzter Druckluft auf das Werkzeug eingewirkt wird, wobei die Druckluft auf eine Temperatur erhitzt wird, welche über der Schmelztemperatur eines mit dem Werkzeug verarbeiteten Kunststoffmaterials liegt.

13. Verfahren nach Anspruch 12, **dadurch gekennzeichnet, dass** Druckluft erzeugt wird, dass diese über ein steuerbares Ventil (6, 7) an einen elektrischen Lufterhitzer (9) abgegeben und in diesem erhitzt wird und vom Lufterhitzer über eine flexible Leitung zu einer Düse (13) geleitet wird, welche mittels mindestens einem Handgriff (14) bedienbar ist, um durch Führen und Positionieren der Düse durch die Bedienungsperson mindestens einen erhitzten Luftstrahl auf das zu reinigenden Werkzeug zu richten.

14. Verfahren nach einem der Ansprüche 12 oder 13, **dadurch gekennzeichnet, dass** Druckluft mit einem Druck von 3 bis 15 bar, insbesondere bis 10 bar, erzeugt und auf eine Temperatur von maximal 650°C erhitzt wird.
